# EUROPEAN PATENT APPLICATION

(11) **EP 4 506 671 A1**
(43) Date of publication of application: **12.02.2025**
(21) Application number: 23191063.9
(22) Date of filing: 11.08.2023
(51) Int. Cl.: G01K 17/20

(54) **CALCULATING HEAT FLOW THROUGH A BUILDING ENCLOSURE**

(71) Applicant: InUnum AG, 9491 Ruggell (LI)
(72) Inventor: Hackl, Eberhard, 9491 Rugell (LI); Lenz, Patrick, 9491 Rugell (LI)
(74) Representative: Torggler & Hofmann Patentanwälte - Rankweil

(57) **Abstract**

A method, a system, a computer program and a data carrier signal for obtaining a 3D thermographic representation of at least an exterior side of a building enclosure and for calculating heat flow through at least part of a building enclosure for at least part of the building enclosure based on a 3D thermographic representation of at least an exterior side of the building enclosure, at least one temperature of an interior environment and at least one temperature of an exterior environment.

## Description

### TECHNICAL FIELD

In one aspect the invention is in the field of calculating a heat flow through at least part of a building enclosure.

The term "building enclosure" denotes the physical separator between the conditioned and unconditioned environment of a building. The term "3D" stands for "three-dimensional". The term "interior environment" means the environment contained inside the building (the conditioned environment). The term "exterior environment" means the environment outside the exterior side of the building enclosure (the unconditioned environment).

### BACKGROUND

It is known to obtain a thermographic representation of the interior side of a building enclosure or the exterior side of a building enclosure by combining a digital 3D map of a 3D geometry and thermographic data of the interior side or the exterior side of the building enclosure wherein the 3D map and the thermographic picture are generated separately. This provides only a static picture of the heat flow.

US 10,989,542 B2 describes a system comprising a 3D scanner and a thermographic camera the relative positions of which are known at least during operation for obtaining a 3D thermographic representation of the interior side or the exterior side of a building enclosure ("heat map"). This heat map can be used to infer conclusions regarding a state of the building enclosure or to more precisely obtain a position of a sensor inside the building by comparing a heat map obtained at an earlier time to a heat map obtained by the sensor. Calculation of heat flow or thermal transmittance is not mentioned.

### SUMMARY OF INVENTION

Known techniques do not allow a dynamic calculation of the heat flow through a building enclosure. The results are often inaccurate.

It is an object of the invention to provide a method, a system, a computer program and a data carrier signal which enable a user to obtain in a fast way more results with a higher spatial resolution for the heat flow through at least part of a building enclosure.

Still other objects and advantages of the invention will in part be obvious and will in part be apparent from the specification and drawings.

One object of the disclosure relates to a method for calculating heat flow through at least part of a building enclosure, the at least part of the building enclosure having an interior side and an exterior side, comprising at least the steps of:
- providing at least one 3D scanner
- providing at least one thermographic camera with known intrinsic parameters
- providing the extrinsic parameters of the joint system of the at least one 3D scanner and the at least one thermographic camera
- obtaining at least one temperature of an interior environment of the building, preferably by moving the at least one 3D scanner and the at least one thermographic camera along the interior side of the at least part of the building enclosure while operating the at least one 3D scanner and the at least one thermographic camera thereby obtaining a digital 3D map of a 3D geometry and thermographic data of the interior side of the at least part of the building enclosure
- moving the at least one 3D scanner and the at least one thermographic camera along the exterior side of the at least part of the building enclosure while operating the at least one 3D scanner and the at least one thermographic camera thereby obtaining a digital 3D map comprising a plurality of 3D points which represent a 3D geometry and thermographic data of the exterior side of the at least part of the building enclosure such that at least for a plurality of 3D points contained in the digital 3D map there is corresponding thermographic data
- obtaining at least one temperature of an exterior environment of the building
- using a computer for calculating the heat flow through the at least part of the building enclosure based on
   - the at least one temperature of the interior environment, and
   - the at least one temperature of the exterior environment, and
   - those 3D points of the exterior side of the at least part of the building enclosure for which there is corresponding thermographic data

Except for the step of using the computer for calculating the heat flow which necessarily must be the last step (it can be done immediately after the other steps or at a later time), the order of the other steps is irrelevant. For example, it is of course irrelevant whether the step regarding the exterior side of the building enclosure is done before the step obtaining the at least one temperature of the interior environment, or the other way round. Also, it does not matter, at which step the at least one temperature of the exterior environment is obtained.

Another object of the disclosure relates to a system for calculating heat flow through at least part of a building enclosure, the at least part of the building enclosure having an interior side and an exterior side, comprising:
- at least one 3D scanner
- at least one thermographic camera with known intrinsic parameters
- at least one computer configured to obtain the extrinsic parameters of the joint system of the at least one 3D scanner and the at least one thermographic camera
- at least one computer configured to obtain at least one temperature of an interior environment of the building, preferably by obtaining from the at least one 3D scanner, by moving the at least one 3D scanner around, a digital 3D map of a 3D geometry of the interior side of the at least part of the building enclosure and from the at least one thermographic camera, by moving the at least one thermographic camera around, thermographic data of the interior side of the at least part of the building enclosure such that at least for a plurality of 3D points contained in the digital 3D map there is corresponding thermographic data
- at least one computer configured to obtain from the at least one 3D scanner a digital 3D map comprising a plurality of 3D points which represent a 3D geometry of the exterior side of the at least part of the building enclosure and from the at least one thermographic camera thermographic data of the exterior side of the at least part of the building enclosure such that at least for a plurality of 3D points contained in the digital 3D map there is corresponding thermographic data
- at least one computer configured to obtain at least one temperature of an exterior environment of the building
- at least one computer configured to calculate the heat flow through the at least part of the building enclosure based on
   - the at least one temperature of the interior environment, and
   - the at least one temperature of the exterior environment, and
   - those 3D points of the exterior side of the at least part of the building enclosure for which there is corresponding thermographic data

The at least one computer cited in the previous paragraphs can be present in the form of a single computer or in the form of at least two computers. In the latter case a distributed computing environment can be used.

Thermographic data can be present in the form of a thermographic picture, however, pictorial representation is not necessary.

It is possible to create a 3D thermographic representation of at least the exterior side of the at least part of the building enclosure based on
- the 3D maps of the exterior side of the at least part of the building enclosure, and
- the thermographic data of the exterior side of the at least part of the building enclosure

It is possible to create a 3D thermographic representation of at least the interior side of the at least part of the building enclosure based on
- the 3D maps of the interior side of the at least part of the building enclosure, and
- the thermographic data of the interior side of the at least part of the building enclosure

Yet another object of the invention relates to a computer program which when the program is executed by a computer causes the computer to carry out a method according to at least one of the embodiments discussed in the present disclosure or to configure at least one computer to function as the at least one computer of the system according to at least one embodiment of the present disclosure.

Still another object of the invention relates to a data carrier signal carrying the computer program referred to in the previous paragraph.

These objects allow for a more exact calculation of the heat flow through the at least part of the building enclosure due to the use of 3D points of the exterior side of the at least part of the building enclosure for which there is corresponding thermographic data, which can be obtained very quickly.

With the possible exception of the provision of the at least one temperature of the interior and/or exterior environment (the temperature of the exterior environment should, of course, be measured in the form of the environment temperature outside the building or at least nearby the exterior side of the building enclosure) no temperature feelers are necessary.

It is generally not necessary to know the thickness of the building enclosure.

The material properties of the substance of the building enclosure can be considered by using known material constants or obtaining calibration measurements.

Calculation of the thermal transmittance (i. e. the rate of transfer of heat through a material, also known as U-value) through the at least part of the building enclosure for each position of the at least part of the building enclosure can, e. g., be done as described in the publication "Infrared thermovision technique for the assessment of thermal transmittance value of opaque building elements on site" R. Albatici, A.M. Tonelli / Energy and Buildings 42 (2010) 2177-2183 (cf. in particular section 3.2).

The term "extrinsic parameters" denotes all parameters necessary to transform from a 3D coordinate system of the 3D scanner into a 3D coordinate system of the thermographic camera (and vice versa). These transformations can include rotations, translations, scalings, mirroring operations and so on.

The term "intrinsic parameters" denotes all parameters necessary to transform a point in the 3D coordinate system of the thermographic camera into a 2D projection plane of the thermographic camera. These transformations include camera parameters such as focal length, relative offsets, distortions and so on.

Preferred embodiments of the invention are described in dependent claims.

### DESCRIPTION OF EMBODIMENTS

The following description refers to both, embodiments of the method and of the system, of the invention.

In some embodiments the at least part of the building enclosure comprises the whole of the building enclosure.

Simultaneously obtaining the 3D map of the 3D geometry and the thermographic data of the interior side of the at least part of the building enclosure can be done, e. g., by using the well-known SLAM algorithm ("simultaneous location and mapping" algorithm) for combining the 3D map and the thermographic data.

In principle, it is sufficient to represent the interior environment solely by a single temperature value or a few temperature values which can, e. g., be obtained by a temperature feeler. It is, however, preferred to obtain a plurality of temperature values, in particular by moving the at least one 3D scanner and the at least one thermographic camera along the interior side of the at least part of the building enclosure while operating the at least one 3D scanner and the at least one thermographic camera thereby obtaining a digital 3D map of a 3D geometry and thermographic data of the interior side of the at least part of the building enclosure, as this guarantees results which are more exact.

In case both the interior side and the exterior side of the building enclosure are represented by a 3D map and thermographic data, it is possible to first obtain the 3D map of the 3D geometry and the thermographic data of the interior side of the at least part of the building enclosure and then to obtain the 3D map of the 3D geometry and the thermographic data of the exterior side of the at least part of the building enclosure. It is also possible to revise this order or to obtain the 3D map of the 3D geometry and the thermographic data of the interior side and the exterior side of the at least part of the building enclosure essentially at the same time by using two separate systems.

In order to calibrate the results obtained by interpreting the thermographic data, in some embodiments, a known geometric pattern is used to calibrate the at least one thermographic camera.

In some embodiments it is envisioned that the at least one 3D scanner and the at least one thermographic camera are moved by being arranged on at least one carrier such as a person or an automobile carrier, e. g. a robot. Such a carrier can be ground-bound or airborne.

Preferably, the relative positions of the at least one 3D scanner and the at least one thermographic camera are known because they are mounted on a common carrier. Alternatively, e. g. if the at least one 3D scanner and the at least one thermographic camera are arranged on different carriers, the position of the at least one 3D scanner and the at least one thermographic camera can be obtained separately (e. g., by using an inertial measurement unit for each of them) and the relative positions of the at least one 3D scanner and the at least one thermographic camera can be calculated at any time.

Although in some situations it might be sufficient to use a single value for the external environment temperature, it might be necessary to sometimes use several values at different positions of the exterior side of the at least part of the building enclosure. This might happen due to sun exposure varying along the exterior side of the at least part of the building enclosure or due to exposure to varying wind conditions.

### BRIEF DESCRIPTION OF DRAWINGS

Figure 1 shows an embodiment of the method.
Figure 2 shows a possible result of the method according to Figure 1.
Figure 3 shows an embodiment of the system.
Figure 4 shows the connection between intrinsic and extrinsic parameters.

### DETAILED DESCRIPTION OF DRAWINGS

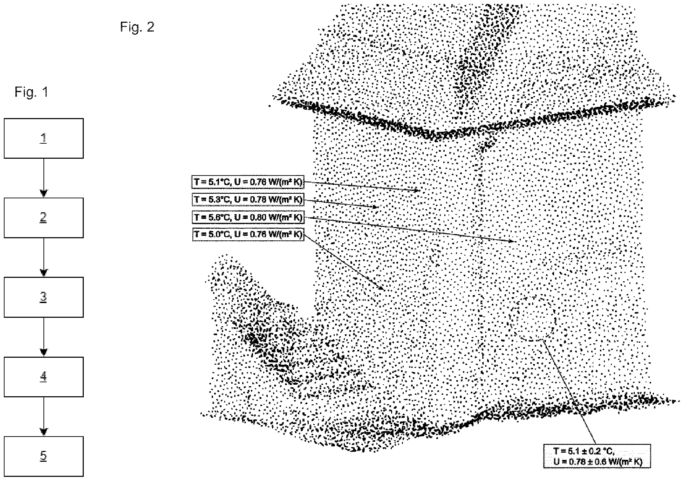

A possible embodiment of the method is shown in Figure 1 wherein it is to be noted that at least some of the steps (steps no. 2, 3 and 4) can permutated.

In a first step (step 1) the thermographic camera is calibrated at the location by doing an emissivity adjustment of the thermographic camera. How this is to be done is known in the art, cf. for example, "Quantitative thermography for the estimation of the U-value: state of the art and a case study" Nardi I., Sfarra S., Ambrosini D., Journal of Physics: Conference Series 547 (2014).

In step 2 a temperature of the exterior environment (preferably air temperature) is obtained, e. g. by using the thermographic camera which is pointed at aluminium foil stretched after crumpling as detailed in "Quantitative thermography for the estimation of the U-value: state of the art and a case study" Nardi I., Sfarra S., Ambrosini D., Journal of Physics: Conference Series 547 (2014). Alternatively, an extra temperature sensor could be used.

In step 3 a combined 3D scan and thermographic measurement of the exterior side of the at least part of the building enclosure is obtained. The extrinsic parameters of the joint system of the at least one 3D scanner and the at least one thermographic camera are used to match the 3D scan data and the thermographic measurements.

In step 4 a combined 3D scan and thermographic measurement of the interior side of the at least part of the building enclosure is obtained. The extrinsic parameters of the joint system of the at least one 3D scanner and the at least one thermographic camera are used to match the 3D scan data and the thermographic measurements.

During step 3 and step 4 or afterwards as a separate step 5 the 3D scans and thermographic measurements are registered using at least one computer in order to create a digital twin of the building which includes the thermographic information.

In step 6 (or, if the digital twin is created during step 3 and step 4, step 5) at least one computer is used for calculating the heat flow (e. g., thermal transmittance) through the at least part of the building enclosure for each position of the at least part of the building enclosure based on those 3D points of the interior side and the exterior side of the at least part of the building enclosure for which there is corresponding thermographic data and based on the at least one exterior temperature.

At least one of step 3, step 4, step 5 and step 6 can be done locally on the system according to the invention or it could be done in an extra computing environment.

Figure 2 shows a possible result of the method shown in Figure 1. A digital twin (in this Figure only the exterior side is shown) of a building enclosure is shown in the form of a sparse point cloud which includes not only the 3D data of the position of the points but also thermographic information such as temperature, heat flow and U-value.

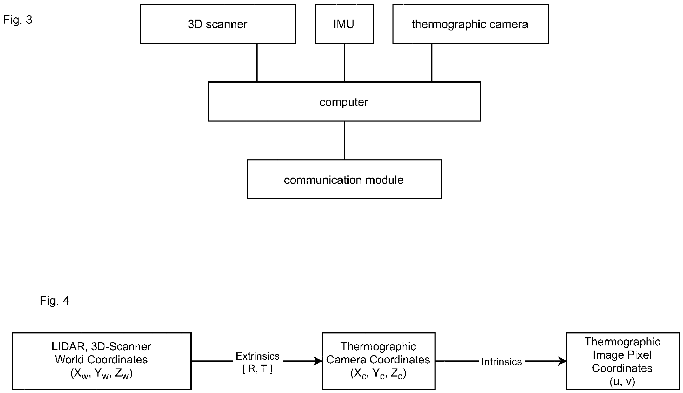

A system for calculating heat flow through at least part of a building enclosure is shown in Figure 3.

Figure 4 shows: The 3d data obtained from the 3D scanner is transformed, e. g. using rotations and translations, into the local coordinate system of the thermographic camera. Then the 3D points of the local coordinate system are projected into the 2D space of the thermographic camera.

## Claims

1. Method for calculating heat flow through at least part of a building enclosure, the at least part of the building enclosure having an interior side and an exterior side, comprising at least the steps of:
- providing at least one 3D scanner
- providing at least one thermographic camera with known intrinsic parameters
- providing the extrinsic parameters of the joint system of the at least one 3D scanner and the at least one thermographic camera
- obtaining at least one temperature of an interior environment of the building
- moving the at least one 3D scanner and the at least one thermographic camera, preferably simultaneously, along the exterior side of the at least part of the building enclosure while operating, preferably simultaneously, the at least one 3D scanner and the at least one thermographic camera thereby obtaining a digital 3D map comprising a plurality of 3D points which represent a 3D geometry and thermographic data of the exterior side of the at least part of the building enclosure such that at least for a plurality of 3D points contained in the digital 3D map there is corresponding thermographic data
- obtaining at least one temperature of an exterior environment of the building
- using a computer for calculating the heat flow through the at least part of the building enclosure based on
• the at least one temperature of the interior environment, and
• the at least one temperature of the exterior environment, and
• those 3D points of the exterior side of the at least part of the building enclosure for which there is corresponding thermographic data.

2. Method according to the preceding claim wherein
- obtaining at least one temperature of the interior environment is done by moving the at least one 3D scanner and the at least one thermographic camera, preferably simultaneously, along the interior side of the at least part of the building enclosure while, operating, preferably simultaneously, the at least one 3D scanner and the at least one thermographic camera thereby obtaining a digital 3D map of a 3D geometry and thermographic data of the interior side of the at least part of the building enclosure such that at least for a plurality of 3D points contained in the digital 3D map there is corresponding thermographic data, and
- a computer is used for calculating the heat flow through the at least part of the building based on
• the at least one temperature of the exterior environment, and
• those 3D points of the exterior side of the at least part of the building enclosure for which there is corresponding thermographic data, and
• those 3D points of the interior side of the at least part of the building enclosure for which there is corresponding thermographic data

3. Method according to one of the preceding claims wherein in order to calibrate the results obtained by interpreting the thermographic data a known geometric pattern is used to calibrate the at least one thermographic camera.

4. Method according to at least one of the preceding claims wherein the at least one 3D scanner and the at least one thermographic camera are moved by being arranged on at least one carrier, preferably a common carrier.

5. Method according to at least one of the preceding claims wherein
- several values for the temperature of the exterior environment at different positions of the exterior side of the at least part of the building enclosure, and/or
- several values for the temperature of the interior environment at different positions of the interior side of the at least part of the building enclosure
are used.

6. Method according to at least one of the preceding claims wherein the extrinsic parameters of the joint system of the at least one 3D scanner and the at least one thermographic camera are used to match the 3D scan data and the thermographic data.

7. A system for calculating heat flow through at least part of a building enclosure, the at least part of the building enclosure having an interior side and an exterior side, comprising:
- at least one 3D scanner
- at least one thermographic camera with known intrinsic parameters
- at least one computer configured to obtain the extrinsic parameters of the joint system of the at least one 3D scanner and the at least one thermographic camera
- at least one computer configured to obtain at least one temperature of an interior environment of the building
- at least one computer configured to obtain from the at least one 3D scanner, by moving the at least one 3D scanner around, a digital 3D map comprising a plurality of 3D points which represent a 3D geometry of the exterior side of the at least part of the building enclosure and from the at least one thermographic camera thermographic, by moving the at least one thermographic camera around, data of the exterior side of the at least part of the building enclosure such that at least for a plurality of 3D points contained in the digital 3D map there is corresponding thermographic data
- at least one computer configured to obtain at least one temperature of an exterior environment of the building
- at least one computer configured to calculate the heat flow through the at least part of the building enclosure based on
• the at least one temperature of the interior environment, and
• the at least one temperature of the exterior environment, and
• those 3D points of the exterior side of the at least part of the building enclosure for which there is corresponding thermographic data.

8. System according to the preceding claim wherein at least one computer is configured
- to obtain at least one temperature of the interior environment from the at least one 3D scanner, by moving the at least one 3D scanner around, a digital 3D map of a 3D geometry of the interior side of the at least part of the building enclosure and from the at least one thermographic camera, by moving the at least one thermographic camera around, a thermographic picture of the interior side of the at least part of the building enclosure thereby obtaining a digital 3D map of a 3D geometry and thermographic data of the interior side of the at least part of the building enclosure such that at least for a plurality of 3D points contained in the digital 3D map there is corresponding thermographic data, and
- wherein at least one computer is configured to calculate the heat flow through the at least part of the building enclosure based on
• the at least one temperature of the exterior environment, and
• those 3D points of the exterior side of the at least part of the building enclosure for which there is corresponding thermographic data, and
• those 3D points of the interior side of the at least part of the building enclosure for which there is corresponding thermographic data

9. System according to one of the two preceding claims wherein the at least one 3D scanner and the at least one thermographic camera are arranged on at least one carrier, preferably a common carrier.

10. System according to the preceding claim wherein the at least one computer is a single computer which is arranged on the at least one carrier or the at least one computer comprises at least two computers, at least one of which is arranged on the at least one carrier and at least one of which is arranged apart from the at least one carrier.

11. Computer program which when the program is executed by a computer causes the computer to carry out a method according to at least one of claims 1 to 6 or to configure at least one computer to function as the at least one computer of the system according to at least one of claims 7 to 10.

12. A data carrier signal carrying the computer program of the preceding claim.
